# EUROPEAN PATENT SPECIFICATION

(11) **EP 4 341 330 B1**
(45) Date of publication and mention of the grant of the patent: **19.02.2025**
(21) Application number: 22729221.6
(22) Date of filing: 17.05.2022
(51) Int. Cl.: C08J 9/30, C08J 9/00, C08G 77/00, C08G 63/00, C08J 9/02

(54) **PROCESS FOR MANUFACTURING A THERMOSET POLYMER FOAM AND POLYMER FOAM**
VERFAHREN ZUR HERSTELLUNG EINES DUROPLASTISCHEN POLYMERSCHAUMS UND POLYMERSCHAUM
PROCÉDÉ DE FABRICATION D'UNE MOUSSE POLYMÈRE THERMODURCIE ET MOUSSE POLYMÈRE

(30) Priority: 17.05.2021 EP 21174040
(43) Date of publication of application: 27.03.2024
(73) Proprietor: Plantics Holding B.V., 6827 AV Arnhem (NL)
(72) Inventor: THYS, Ferry, 6827 AV ARNHEM (NL); WIEGERSMA, Tijmen, 6827 AV ARNHEM (NL); GRÜNBAUER, Henri Jacobus Marie, 6827 AV ARNHEM (NL); NOORDZIJ, Geert Jan, 6827 AV ARNHEM (NL)
(74) Representative: De Vries & Metman
(86) International application number: PCT/EP2022/063288
(87) International publication number: WO 2022/243293

(56) References cited:
- WO-A1-2016/207517
- WO-A1-2019/122667

## Description

The present invention pertains to a process for manufacturing a thermoset polymer foam comprising the steps of polyol monomers and polycarboxylic acid monomers, or hydroxycarboxylic acid monomers, or a combination of polyol monomers and polycarboxylic acid monomers and hydroxycarboxylic acid monomers in the liquid phase.

Thermoset polymer foams are known in the art.

WO2012052385 describes a process for producing a glycerol tri-carboxylic acid polyester foam which comprises the steps of combining glycerol and a tri-carboxylic acid in the liquid phase to provide a reaction mixture, and keeping the reaction mixture at a temperature of between 80°C and 130°C from the start of the reaction until a conversion of at least 90% is obtained.

WO2013121033 describes a process for manufacturing a glycerol-tricarboxylic acid polyester foam which comprises the steps of combining glycerol and a tri-carboxylic acid to provide a liquid reaction mixture and contacting the reaction mixture with a substrate under polymerization conditions, wherein the substrate has a top layer comprising one or more of metal, metal oxide, and metal halide.

WO2016207517 describes a method for manufacturing polyester foams in which a polyol component including at least one element selected from glycerol, diglycerol and the glycerol oligomers, a polyacid component including citric acid, a surface-active agent; and an esterification catalyst are combined and the mixture is heated to a temperature no lower than 135 °C, preferably no lower than 175 °C, so as to react the polyol component with the polyacid component to form a block of thermoset polyester foam. It is stated that the surfactant is added to reduce the cell size, narrow the cell size distribution, and reduce the density of the foams obtained. It is indicated that in one embodiment, the surfactant is a mixture of an anionic surfactant and of a cationic surfactant. The combination of sodium dodecyl sulfate (SDS) and tetradecyltrimethylammonium bromide (TTAB) is indicated to be preferred. The use of nonionic surfactants such as alkyl polyglucoside is stated to be an alternative.

WO2019122667 describes a method for producing a thermoset polyester foam comprising the steps of preparing a prepolymerised composition of polyol, polyacid, and catalyst, adding a surfactant to the composition, and heating the mixture to a temperature at least equal to 160 °C so as to form a thermoset polyester foam. This document mentions the TTAB/SDS combination and the alkylpolyglucoside discussed above. It additionally mentions a combination of cetyltrimethylammoniumbromide (CTAB) and SDS.

While the processes described in these references give interesting results, there is a need for a process in which a foam with good properties can be obtained while using less surfactant. The present invention provided such a process.

The invention pertains to a process for manufacturing a thermoset polymer foam, comprising the steps of
- subjecting a reaction mixture comprising surfactant and a prepolymer to an agitation step, the prepolymer being obtained by polymerisation of a combination of polyol monomers and polycarboxylic acid monomers, of hydroxycarboxylic acid monomers, or of a combination of polyol monomers and polycarboxylic acid monomers and hydroxycarboxylic acid monomers, the prepolymer having an extent of polymerisation between 0.1 and 0.8, and
- subjecting the reaction mixture thus obtained to a curing step in the absence of agitation, to obtain a thermoset polymer foam,
wherein the surfactant comprises an ampholytic surfactant, the total surfactant concentration being in the range of 0.1-6 wt.%.

It has been found that the use of an ampholytic surfactant makes it possible to obtain a foam with good properties with less surfactant than described in WO2016207517 or WO2019122667. The foamed polyester of the present invention is "green", biodegradable, and non-toxic, and can be cleanly combusted. It finds application in, int. al., packaging materials, insulation materials, and materials with a short life cycle.

Further advantages of the present invention and specific embodiments thereof will be discussed in more detail below.

In the present invention an ampholytic surfactant is used. Within the context of the present specification an ampholytic surfactant is defined as a surfactant which has a positive charge and a negative charge within the same molecule under the conditions prevailing during polymerisation and curing.

The ampholytic nature of the surfactant ensures that the surfactant retains its positive and negative charge even when the pH in the reaction mixture changes. The surfactants described in the references cited above do not show this behaviour. Not wishing to be bound by theory, it is believed that this property ensured that the surfactant has an optimal effect as surfactant in the reaction medium during the polymerisation reaction.

In one embodiment, the ampholytic surfactant comprises a positive charge on at least one nitrogen atom and a negative charge on at least one oxygen atom, e.g., in a group selected from amineoxide, carboxylate, sulphate, sulphonate, phosphate, and phosphonate. More specifically, it may be preferred for the ampholytic surfactant to comprises at least one straight-chain C8-C20 alkyl tail, at least one positively charged nitrogen atom, e.g., in a quaternary ammonium group, and at least one negative charge, e.g., in a group selected from amineoxide, carboxylate, sulphate, sulphonate, phosphate, or phosphonate.

Examples of suitable ampholytic surfactants are the following:
alkylbetaines of formula I

   Formula I: R₁R₂R₃N⁺-CH₂-COO⁻
alkylsulfobetaines of formula II

   Formula II: R₁R₂R₃N⁺-CH₂-CH₂-CH₂-SOOO⁻
alkylhydroxysultaines of formula III

   Formula III: R₁R₂R₃N⁺-CH₂-C(OH)H-CH₂-SOOO⁻
amineoxides of formula IV

   Formula IV: R₁R₂R₃N⁺O⁻
alkylamidobetaines of formula V

   Formula V: R₁-CO-NH-CH₂-CH₂-CH₂-R₂R₃N⁺-CH₂-COO⁻
wherein in formula I, II, III, IV, and V
R₁ contains 8 to 20 carbon atoms and R₂ and R₃ each contain 1-4 carbon atoms.

Further suitable surfactants include acylphosphocholine compounds, phosphatidylcholine compounds, phosphatidylethanolamine compounds, phosphatidylinositol compounds, and lecithin. Lecithin is a preferred compound.

Examples of ampholytic surfactants which have been found to be attractive in the present invention include cocamidopropyl betaine, cocamidopropyl hydroxysultaine, coco-betaine, sodium lauroamphoacetate, lauryl sulfobetaine, lauryl hydroxysultaine, and lecithin, e.g., soy lecithin.

Further suitable surfactants include amphiphilic polymeric surfactants. Polymeric surfactants include amphiphilic polymers, micellar polymers, hydrophobically modified water-soluble polymers, or associative polymers. If the hydrophilic part is charged, they can fall under the categories of polyelectrolytes of polyampholytes. Examples are amphiphilic copolymers (alternating or statistic), homopolymers of polymerizable surfactants, amphiphilic diblock and multiblock polymers, and branched (graft, comb, star) polymers.

It has been found that attractive results can be obtained when the reaction mixture further comprises an anionic surfactant, in particular an anionic surfactant selected from the group of C8-C18 alkylsulphate salts, C8-C18 alkylethersulphate salts, C8-C18 alkylcarboxylate salts, C8-C18 alkylethercarboxylate salts, C8-C18 alkylsulphonate salts, C8-C18 alkylethersulphonate salts, C8-C18 alkylsuccinate salts, and C8-C18 alkylethersuccinate salts. C8-C18 alkylethercarboxylate salts such as sodium or potassium laureth-4-carboxylate are considered preferred.

Where the combination of an ampholytic surfactant and an anionic surfactant is used, it may be preferred for the weight ratio of ampholytic surfactant to anionic surfactant to be in the range of 5:1 to 1:5, in particular in the range of 3:1 to 1:3. If the relative amount of ampholytic surfactant is too low, the advantage associated with the presence of this compound, in particular that the total amount of surfactant can be kept relatively low, is not obtained. On the other hand, if the amount of anionic surfactant is too low, the benefit of adding this compound is minor.

In the present invention, the total surfactant concentration in the reaction mixture as it is subjected to the curing step in the absence of agitation is in the range of 0.1-6 wt.%. The total surfactant concentration refers to the total of all surfactant in the system, i.e., the ampholytic surfactant, the anionic surfactant if present, and any nonionic or cationic surfactant that may be present. It is noted that while there is a preference for the presence of an anionic surfactant in addition to the ampholytic surfactant as will be discussed below, the presence of nonionic or cationic surfactant is not required.

If less than 0.1 wt.% of surfactant is used, the effect of the present invention is not obtained. If more than 6 wt.% of surfactant is used, excessive foaming may occur, costs will increase, and no additional benefit is reaped. It is preferred for the reaction mixture as it is subjected to the curing step to have a total surfactant concentration of at least 0.5 wt.%, in particular at least 1 wt.%. Additionally it is preferred for the total surfactant concentration to be at most 5 wt.%, in some embodiments at most 4 wt.%, in particular embodiments at most 3 wt.%. The surfactant concentration is calculated on the total weight of the composition not including water.

The first step in the process according to the invention is subjecting a reaction mixture comprising surfactant and a prepolymer to an agitation step, the prepolymer being obtained by polymerisation of a combination of polyol monomers and polycarboxylic acid monomers, of hydroxycarboxylic acid monomers, or of a combination of polyol monomers and polycarboxylic acid monomers and hydroxycarboxylic acid monomers, the prepolymer having an extent of polymerisation between 0.1 and 0.8.

Suitable polyol monomers for use in the present invention include aliphatic polyalcohols with 2-15 carbon atoms. The aliphatic polyalcohol does not comprise any aromatic moieties, nitrogen atoms or sulphur atoms. In some embodiments, the aliphatic polyalcohol consists essentially of carbon, oxygen and hydrogen atoms. The aliphatic polyalcohol comprises at least two hydroxyl groups, preferably at least three hydroxyl groups. In general, the number of hydroxyl groups will be 10 or fewer, preferably 8 or fewer, more preferably 6 or fewer. The aliphatic polyalcohol has 2 to 15 carbon atoms, preferably 3 to 10 carbon atoms. Examples of suitable aliphatic polyalcohols are 1,2-propane diol, 1,3-propane diol, 1,2-ethane diol, 1,4-butanene diol, glycerol, sorbitol, xylitol, and mannitol. Glycerol, sorbitol, xylitol, and mannitol are preferred examples of suitable aliphatic polyalcohols. Glycerol is the most preferred example of a suitable aliphatic polyalcohol. One reason for this is that glycerol has a melting point of 20 ºC, which allows easy processing (compared to, e.g., xylitol, sorbitol, and mannitol, which all have melting points above 90 ºC). Moreover, glycerol is easily accessible and results in polymers having desirable properties. Accordingly, in some embodiments, the aliphatic polyalcohol consists essentially of glycerol. As used herein, "consists essentially of" means that other components (here: other aliphatic polyalcohols) may be present in amounts that do not detrimentally affect the properties of the material.

Mixtures of different aliphatic polyalcohols may also be used. The aliphatic polyalcohol may comprise at least 50 mol% of glycerol, sorbitol, xylitol, or mannitol, preferably at least 70 mol%, preferably at least 90 mol%. Preferably, the balance is an aliphatic polyalcohol having 3 to 10 carbon atoms. The polyalcohol preferably comprises at least 70 mol% of glycerol, preferably at least 90 mol%, more preferably at least 95 mol%.

In some embodiments, the aliphatic polyalcohol has a ratio of hydroxyl groups over the number of carbon atoms from 1:4 (i.e., one hydroxyl group per four carbon atoms) to 1:1 (i.e., one hydroxyl group per carbon atom). It is preferable for the ratio of hydroxyl groups over the number of carbon atoms to be from 1:3 to 1:1, more preferably from 1:2 to 1:1, still more preferably from 1:1.5 to 1:1. Compounds wherein the ratio of hydroxyl groups to carbon atoms is 1:1 are considered especially preferred.

Suitable polycarboxylic acid monomers for use in the present invention include aliphatic polycarboxylic acids with 3 to 15 carbon atoms, preferably 3 to 10 carbon atoms. The aliphatic polycarboxylic acid does not comprise aromatic moieties, or any nitrogen or sulphur atoms. In some embodiments, the aliphatic polycarboxylic acid consists of carbon, oxygen and hydrogen atoms. The aliphatic polycarboxylic acid comprises at least two carboxylic acid groups, preferably three carboxylic acid groups. In general, the number of carboxylic acid groups will be 10 or fewer, preferably 8 or fewer, more preferably 6 or fewer.

In one embodiment the aliphatic polycarboxylic acid comprises at least 10 wt.% of tricarboxylic acid, calculated on the total amount of aliphatic polycarboxylic acid. The aliphatic polycarboxylic acid may comprise at least 30 wt.% of tricarboxylic acid, calculated on the total amount of acid, preferably at least 50 wt.%, more preferably at least 70 wt.%, still more preferably at least 90 wt.%, most preferably 95 wt.%. In some embodiments, the aliphatic polycarboxylic acid consists essentially of tricarboxylic acid, preferably essentially of citric acid. The aliphatic polycarboxylic acid may be a mixture of acids, such as a mixture of tricarboxylic acid(s) and dicarboxylic acid(s). In some embodiments, the aliphatic polycarboxylic acid comprises a combination of at least 2 wt.%, preferably at least 5 wt.%, more preferably at least 10 wt.% dicarboxylic acid, and at least 10 wt.%, preferably at least 30 wt.%, more preferably at least 70 wt.%, still more preferably at least 90 wt.%, most preferably at least 95 wt.% tricarboxylic acid, calculated on the total amount of aliphatic polycarboxylic acid.

The dicarboxylic acid, if used, may be any dicarboxylic acid which has two carboxylic acid groups and, in general, at most 15 carbon atoms. Examples of suitable dicarboxylic acids include itaconic acid, malic acid, succinic acid, glutaric acid, adipic acid, sebacic acid, oxalic acid, maleic acid, fumaric acid, muconic acid, suberic acid, and azelaic acid. Itaconic acid and succinic acid may be preferred. In one embodiment a tricarboxylic acid is used. The tricarboxylic acid, if used, may be any tricarboxylic acid which has three carboxylic acid groups and, in general, at most 15 carbon atoms. Examples include citric acid, isocitric acid, aconitic acid (both cis and trans), and 3-carboxy-cis,cis-muconic acid. The use of citric acid is considered preferred, both for reasons of costs and of availability. Where applicable, acids may also be provided in the form of their anhydrides, e.g. citric acid anhydride.

Suitable hydroxycarboxylic acid monomers for use in the present invention include aliphatic hydroxycarboxylic acid monomers with 3 to 15 carbon atoms, in particular 3-10 carbon atoms. The hydroxycarboxylic acid monomers have at least one hydroxyl group, preferably 1 to 3 hydroxyl groups, and at least one, preferably 1 to 3, carboxyl groups. In one embodiment at least one hydroxyl group is present at the alpha position with respect to at least one carboxylic acid group. Examples include tartaric acid, malic acid, lactic acid, and glycolic acid.

In a preferred embodiment of the present invention the prepolymer is derived from a combination of polyol monomers and polycarboxylic acid monomers,
the polyol monomers preferably being selected from aliphatic polyols with 2-15 carbon atoms, in particular polyols with at least three hydroxygroups, e.g., glycerol, sorbitol, xylitol, and mannitol, in particular glycerol,
the polycarboxylic acid monomers preferably being selected from aliphatic polycarboxylic acids with 3-15 carbon atoms, in particular polycarboxylic acids with at least three carboxylic acid groups, e.g., citric acid, isocitric acid, aconitic acid (both cis and trans), and 3-carboxycis,cis- muconic acid, in particular citric acid.

The prepolymer used in the present invention is obtained by polymerisation of a combination of polyol monomers and polycarboxylic acid monomers, of hydroxycarboxylic acid monomers, or of a combination of polyol monomers and polycarboxylic acid monomers and hydroxycarboxylic acid monomers.

The prepolymer used as starting material in the present invention is obtained by polymerisation of a combination of polyol monomers and polycarboxylic acid monomers, of hydroxycarboxylic acid monomers, or of a combination of polyol monomers and polycarboxylic acid monomers and hydroxycarboxylic acid monomers. The polymerisation can be carried out by combining the monomers to form a liquid phase. Depending on the nature of the compounds this can be done, e.g., by heating a mixture of components to a temperature where the acid will dissolve in the alcohol, in particular in glycerol. Depending on the nature of the compounds this may be, e.g., at a temperature in the range of 20-250°C, e.g., 40-200°C, e.g. 60-200°C, or 90-200°C. In one embodiment, the mixture may be heated and mixed for a period of 1 minute to 2 hours, more specifically 5 minutes to 45 minutes, at a temperature of 80-200°C, in particular 100-200°C, in some embodiments 120-180ºC. If so desired a suitable solvent, e.g., water may be present. Preferably the amount of water will be kept limited as its evaporation is energy-consuming. It may be preferred to add at most 30 wt.% water, in particular at most 20 wt.% water.

An advantage of the process of the present invention is that the polymer preparation step and the foaming step can be separated, making for increased processing flexibility.

Optionally a suitable catalyst can be used for the preparation of the polyester. Suitable catalysts for the manufacture of polyester are known in the art. Preferred catalysts are those that do not contain heavy metals. Useful catalysts are strong acids like, but not limited to, hydrochloric acid, hydroiodic acid (also indicated as hydriodic acid) and hydrobromic acid, sulfuric acid (H2SO4), nitric acid (HNO3), chloric acid (HClO3), boric acid, sodium hypophosphite, perchloric acid (HClO4) trifluoroacetic acid, p-toluenesulphonic acid, sulfonic acid, and trifluoromethanesulfonic acid. Catalysts such as Ti-butoxide, Sn-octanoate, Zn-acetate and Mn-acetate can also be used, although they may be less preferred.

The surfactant can be added to the prepolymer, to the monomers before polymerization, or to during the polymerization process to form the prepolymer. The surfactants may be added on one or more steps, in batch, or continuously, in any sequence. They may optionally be premixed with a limited amount of prepolymer.

The prepolymer used as starting material in the present invention has an extent of polymerisation between 0.1 and 0.8. In the context of the present specification the extent of polymerization is the ratio of the fraction of functional groups that have reacted to the maximum of those functional groups that can react. The extent of polymerization can be determined by way of the acid value (in particular for values below 0.5) or gravimetrically (in particular for values above 0.5).

It will be evident that, in order to determine the extent of polymerization of a polymer derived from an aliphatic polyol and an aliphatic polycarboxylic acid with an unknown extent of polymerization using gravimetric analysis, a sample of the polymer with an unknown extent of polymerization is cured at a temperature from 100 to 220 °C until no more water is lost. The extent of polymerization of the polymer is then 1, allowing one to calculate back the extent of polymerization of the sampled polymer using the water lost during the curing. The desired extent of polymerization will depend on a number of factors.

In particular, a higher extent of polymerisation at this stage of the process has the advantage that less curing further on in the process is required. On the other hand, a higher extent of polymerization may make for a more viscous prepolymer composition which may detrimentally affect the effectiveness of the agitation step. It may be preferred for the extent of polymerization of the prepolymer as it is provided to the agitation step to be at least 0.2, in particular at least 0.3, in particular at least 0.4, more in particular at least 0.5. It may be preferred for it to be at most 0.7.

The reaction mixture comprising surfactant and a prepolymer is subjected to an agitation step. It has been found that the agitation step is required to obtain a foam with good properties. The purpose of the agitation step is to homogeneously disperse the surfactant through the prepolymer. Any kind of agitation method known in the art can be used, including stirring, mixing, shaking. Static mixing may also be used. In one embodiment agitation is carried out using a high shear mixer. High-shear mixing apparatus is known in the art and requires no further elucidation here.

Depending of the degree of polymerisation it may be preferred to have the composition at a temperature which is sufficiently high to ensure that the mixture has a viscosity which is low enough to allow adequate mixing.

The time during which the agitation step is carried out is not critical, as long as the surfactant is homogeneously dispersed through the prepolymer.

After the agitation step, the reaction mixture thus obtained is subjected to a curing step in the absence of agitation, to obtain a thermoset polymer foam. The curing step in the absence of agitation generally takes place for at least part of the time in a mould, into which the agitated mixture has been provided. The shape and size of the mould is not critical, and will depend on the shape and size of the foam object to be formed. The shape and size of the mould should be selected such that the increase in volume can be accommodated.

The curing step generally takes place at an internal temperature of at least 80ºC, in particular at least 100ºC, more in particular at least 120ºC, even more in particular at least 130ºC. An internal temperature which is very high results in increased side reactions. It is therefore preferred for the internal temperature not to reach values above 250ºC. It may be preferred for the internal temperature to be in the range of 130-200ºC. The internal temperature is measured during curing or immediately after the article is removed from a means for curing, such as an oven or a press.

Curing can be carried out using heating technology known in the art, e.g., in in an oven with an oven temperature from 80°C up to 450°C. Different types of ovens may be used, including but not limited to belt ovens, convection ovens, microwave ovens, infra-red ovens, hot-air ovens, conventional baking ovens and combinations thereof. Vacuum ovens are also considered attractive. Curing can be done in a single step, or in multiple steps. The curing times range from 5 seconds up to 24 hours, depending on the size and shape of the object and on the type of oven and temperature used. The total curing time preferably is at least 10 minutes, in particular at least 20 minutes, and at most 12 hours, in particular at most 6 hours.

While longer curing times are not disadvantageous *per se,* it may be less attractive from an economical point of view. It is within the scope of a person skilled in the art to select suitable curing conditions.

To allow controlled foam formation it is preferred for the curing step to be carried out under a temperature regimen in which the temperature of the oven is slowly increased.

If so desired, the curing step can be carried out in two stages, wherein a first curing step is carried out in a mould, followed by removal of the cured foamed object from the mould, and subjecting the cured foamed object to a second curing step, also indicated as post-curing step. If so desired a machining step can be carried out on the cured foamed object after it has been removed from the mould, before and/or after is subjected to the post-curing step.

After curing, the extent of polymerization will generally be greater than 0.80, preferably greater than 0.90. Moreover, immediately after curing, the water content of the article is generally below 10 wt.% (calculated on the total weight of the article), preferably below 5 wt.%, more preferably below 2 wt.%, most preferably below 1 wt.%. Depending on the storage conditions, the water content of the article may increase after curing.

It may be preferred for the process according to the invention to take place in an inert atmosphere, e.g., under nitrogen or argon, to prevent reaction with the oxygen from the air, which may result in yellowing of the polymer.

The mixing and curing steps in the process according to the invention may be carried out at atmospheric pressure, at superatmospheric pressure, and/or at reduced pressure, optionally with different pressure regimens being applied during different stages of the process. In one embodiment the reaction mixture is kept at a pressure below atmospheric pressure for at least part of the reaction time. It is believed that the use of subatmospheric pressure will lead to a product with a lower density. In one embodiment a pressure is applied of at most 0.99 bar, in particular at most 0.8 bar, more in particular at most 0.5 bar, in particular at most 0.1 bar. Lower pressures may also be used, e.g., a pressure of at most 50 mbar, or a pressure of at most 10 mbar. A pressure of at most 1 mbar may even be applied. When working under reduced pressure, the lower limit will generally be determined by the apparatus used. It may in particular be attractive to carry out the curing step at reduced pressure.

In one embodiment, the curing rate may be increased by adding particulate material to the reaction mixture before curing, e.g., in an amount of 1-30 wt.%, in particular 1-20 wt.%. It has been found that the use of seed particles leads to a product with a lower density as compared to a corresponding material manufactured in the absence of seeds. As the skilled person can easily determine, the particles should be large enough to be easily suspended in the reaction mixture, but small enough to be able to act as seeds. 'A value of 3 mm may be mentioned as suitable maximum for the average particle diameter. A value of 0.025 mm may be mentioned as suitable minimum for the average particle diameter, although smaller particles may also be used. In one embodiment, the seeds may have an average particle size of less than 2 mm, in particular less than 1 mm, more in particular in the range of 0.1-0.7 mm. It is within the scope of the skilled person to determine a suitable amount of particles and a suitable particle size, taking the above into account. In one embodiments, the particles are polymer seed particles, in particular of polyester seed particles. In one embodiment, the seeds are of polymer as described herein. This has the advantage that the material that is obtained has a homogeneous chemical composition.

The process of the invention results in the formation of a thermoset polymer foam, comprising a polymer obtained by polymerisation of a combination of polyol monomers and polycarboxylic acid monomers, of hydroxycarboxylic acid monomers, or of a combination of polyol monomers and polycarboxylic acid monomers and hydroxycarboxylic acid monomers, and ampholytic surfactant, the total surfactant concentration being in the range of 0.1-6 wt.%, the polymer having an extent of polymerisation of at least 0.8 and a density of at most 850 gram/liter.

Foams in accordance with the present invention have a homogeneous foam structure, with small cells. In some embodiments, they are rigid at room temperature.

The foam of the present invention has a density of below 850 gram/I. The density will generally be above 5 g/l.

In one embodiment the density is between 10 and 300 gram/I, in particular between 50 and 250 gram/l. In another embodiment, the foam has a density between 300 and 700 gram/I. In a further embodiment the present invention is directed to foams with a density of 500 to 850 g/l, in particular 550-700 g/l. Lower-density materials will be attractive for packaging applications. Higher density materials may have better strength and better dimensional stability.

The polymer aimed for is the reaction product obtained by polymerisation of a combination of polyol monomers and polycarboxylic acid monomers, of hydroxycarboxylic acid monomers, or of a combination of polyol monomers and polycarboxylic acid monomers and hydroxycarboxylic acid monomers. Other components may be present in the reaction medium, but not to an extent that they substantially interfere with the nature of the reaction product. In particular, they should not interfere with foam formation. Suitable components that may be present include catalysts and colorants (dyes and pigments). Other components conventionally used in polymer processing which may be used in the foam of the present invention include inorganic fillers, antibacterial or anti-fungal agents, flame retardants, UV absorbers, and hydrophobic agents.

In general, less than 20 wt. % of the reaction mixture should be made up of other components, preferably less than 15 wt. %, more preferably less than 10 wt. %. In some embodiments it may be preferred for the mixture to contain less than 5 wt. % of additional components, or even less than 2 wt. %. The above pertains to components which end up in the final product. Water, which is evaporated from the final product and other gaseous components that may be added, if any, are not included herein.

The actual size of the polymer object to be produced is not further limited, and may be as large as required. If so desired it can later be converted into suitable pieces. The shortest distance between the centre of the object to be formed by the polymerization and the exterior of the object may be at least 2 mm, more in particular at least 4 mm, depending on the use. The reason for this preference is that the foam-forming process may be improved if the size of the object is larger.

As will be evident to the skilled person, different embodiments of the present invention can be combined unless they are mutually exclusive. All percentages used herein are weight percentages, unless specified otherwise.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

The invention is illustrated by the following examples, without being limited thereto or thereby.

### Examples

### Manufacture of prepolymer masterbatch

Prepolymer masterbatch was manufactured as follows: 1.0 kg of > 99% pure glycerol and 2.0 kg of citric acid (purity > 99%) were put in a stirred and heated reactor. Also 9 g of boric acid (0.5 m/m, > 99% purity) was added. The mixture was heated up in about 15 minutes until 135ºC and kept at that temperature for 15 minutes followed by dilution with tap water to a water content of 20% and further cooling down. The resulting prepolymer had an extent of polymerisation of 0.4. The dilution with tap water was performed to obtain a material with a viscosity suitable for easy downstream handling.

### Example 1

### General description of foam manufacture for this example

A desired amount of the prepolymer masterbatch described above was stirred and heated to a temperature of 140 ºC, until an extent of polymerisation of 0.55 was been reached. The surfactant was added, followed by 5 minutes slow stirring at the same temperature to obtain a first homogenisation. Then, vigorous mixing is applied to obtain further homogenisation of the mixture. Vigorous mixing takes place for 4-10 minutes, depending on the batch volume. Mixing is stopped when a homogeneous mixture is obtained. The mixture is then transferred to the mould which is placed in the oven and subjected to the temperature profile specified in the examples. When the curing profile as described in the examples has been completed, the mould containing the foam is removed from the oven, removed from the mould, machined into the desired shape, and subjected to a post-curing step at the time and temperature indicated in the examples.

The following surfactant (combinations) were tested. Heating took place as specified.

### Example A (comparative)

cetyltrimethylammoniumbromide (CTAB) + sodiumdodecylsulphate (SDS), total amount of surfactant 2.5 wt.%, weight ratio 2:1. Oven temperature sequence temp 150-160-170-180-190°C, time sequence 16 - 16 - 8 - 8 - 16 min. Post-curing was carried out for 120 minutes at 180ºC.

### Example B (comparative)

cetyltrimethylammoniumbromide (CTAB) + sodiumdodecylsulphate (SDS), total amount of surfactant 5 wt.%, weight ratio 2:1. Oven temperature sequence 150-160-170-180-190°C, time sequence 16 - 16 - 8 - 8 - 16 min. Post-curing was carried out for 120 minutes at 180ºC.

### Example 1 (invention)

laurylhydroxysultaine (LHS) + potassium laureth-4 carboxylate (PLC), total amount of surfactant 2.5 wt.%, weight ratio 1:1. Oven temperature sequence 140-150-160-170-180°C, time sequence 16 - 16 - 8 - 8 - 16 min. Post-curing was carried out for 120 minutes at 180ºC.

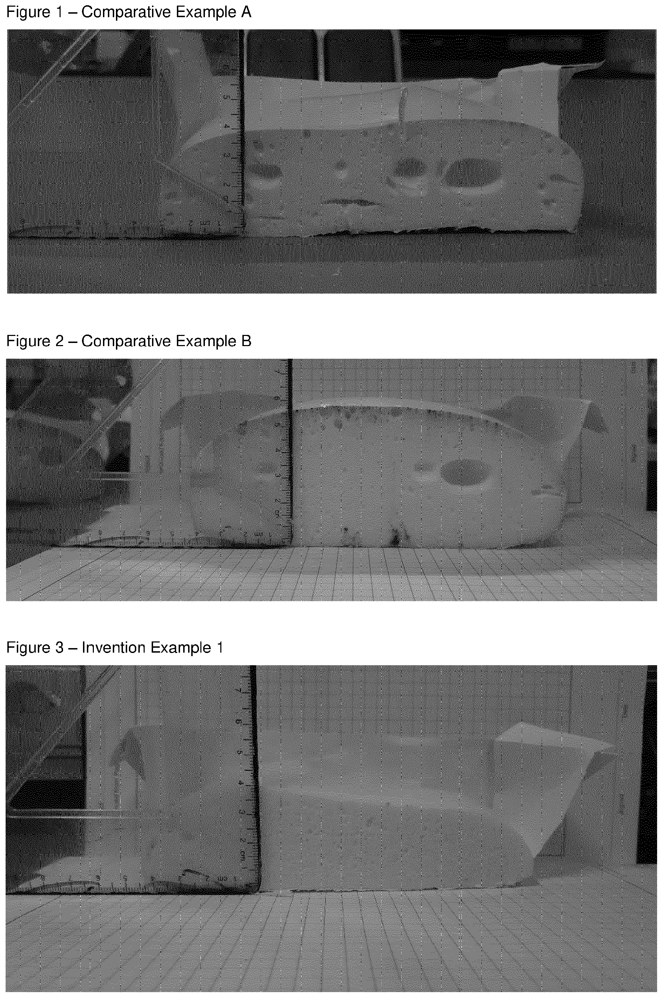

The resulting foams are presented in Figures 1-3. As can be seen from these figures, the surfactant combination according to the invention results in the formation of a foam with small homogenous cells and a homogeneous foam profile. This foam has better properties than the foam of comparative example A, where an inhomogeneous foam profile is obtained. It also has a more homogeneous appearance than the foam of comparative example B, which is obtained with higher surfactant concentrations. These examples thus show that the use of the surfactant of the present invention makes it possible to obtain a foam with good properties while using less surfactant.

### Example 2

600 grams of prepolymer masterbatch described above was mixed with 2.5 wt.% of surfactant (total surfactant concentration), and mixed as described in Example 1.

After mixing, 300 grams of the mixture was poured into an aluminium mould and cured in accordance with the following curing profile: 15 minutes at 140ºC, 30 minutes at 150ºC, 15 minutes at 160ºC, and 60 minutes at 180ºC. Then, the sides of the mould were cut open, and a final curing step was carried out for 120 minutes at 180ºC.

To allow a comparison with the use of the combination of a cationic surfactant and an anionic surfactant in accordance with the prior art also in this manufacturing method, the combination of (1-tetradecyl)trimethylammoniumbromide (TTAB) + potassium laureth-4-carboxylate (PLC) was tested (total amount of surfactant 2.5 wt.%, weight ratio 2:1). Further, an experiment was carried out using soybean lecithin as a further example of an ampholytic surfactant. The combination of laurylhydroxysultaine (LHS) + potassium laureth-4 carboxylate (PLC), tested in Example 1 above, was tested in the present manufacturing method also ((total amount of surfactant 2.5 wt.%, weight ratio 2:1).

The following table gives the results of the experiments:

| Example | surfactants | density | foam properties |
|---|---|---|---|
| C (comp) | TTAB + PLC | 186 g/l | irregular cell size, inhomogeneity and air pockets |
| 2a (inv) | lecithin | 151 g/l | small cells, homogeneous cell size and distribution |
| 2b (inv) | LHS + PLC | 119 g/l | small cells, homogeneous cell size and distribution |

Accordingly, it can be seen from the table that both foams manufactured in accordance with the present invention containing lecithin or LHS + PLC have a lower density and a better foam structure than the foam prepared using the combination of a cationic surfactant and an anionic surfactant.

## Claims

1. A process for manufacturing a thermoset polymer foam, comprising the steps of
- subjecting a reaction mixture comprising surfactant and a prepolymer to an agitation step, the prepolymer being obtained by polymerisation of a combination of polyol monomers and polycarboxylic acid monomers, of hydroxycarboxylic acid monomers, or of a combination of polyol monomers and polycarboxylic acid monomers and hydroxycarboxylic acid monomers, the prepolymer having an extent of polymerisation between 0.1 and 0.8, the extent of polymerisation being measured as described in the description, and
- subjecting the reaction mixture thus obtained to a curing step in the absence of agitation, to obtain a thermoset polymer foam,
wherein the surfactant comprises an ampholytic surfactant, the total surfactant concentration being in the range of 0.1-6 wt.%.

2. Process according to claim 1, wherein the ampholytic surfactant comprises a positive charge on at least one nitrogen atom and a negative charge on at least on oxygen atom, e.g., in a group selected from amineoxide, carboxylate, sulphate, sulphonate, phosphate, and phosphonate.

3. Process according to claim 1, wherein the ampholytic surfactant comprises at least one straight-chain C8-C20 alkyl tail, at least one positively charged nitrogen atom, e.g., in a quaternary ammonium group, and at least one negative charge, e.g., in a group selected from amineoxide, carboxylate, sulphate, sulphonate, phosphate, or phosphonate.

4. Process according to any one of the preceding claims, wherein the ampholytic surfactant is selected from the group of
alkylbetaines of formula I
Formula I: R₁R₂R₃N⁺-CH₂-COO⁻
alkylsulfobetaines of formula II
Formula II: R₁R₂R₃N⁺-CH₂-CH₂-CH₂-SOOO⁻
alkylhydroxysultaines of formula III
Formula III: R₁R₂R₃N⁺-CH₂-C(OH)H-CH₂-SOOO⁻
amineoxides of formula IV
Formula IV: R₁R₂R₃N⁺O⁻
alkylamidobetaines of formula V
Formula V: R₁-CO-NH-CH₂-CH₂-CH₂-R₂R₃N⁺-CH₂-COO⁻
wherein in formula I, II, III, IV, and V
R₁ contains 8 to 20 carbon atoms and R₂ and R₃ each contain 1-4 carbon atoms. acylphosphocholine compounds, phosphatidylcholine compounds, phosphatidylethanolamine compounds, phosphatidylinositol compounds, polymer surfactants, and lecithin, with lecithin being a preferred compound.

5. Process according to any one of the preceding claims, wherein the reaction mixture comprising surfactant and a prepolymer that is subjected to an agitation step further comprises an anionic surfactant, in particular an anionic surfactant selected from the group of C8-C18 alkylsulphate salts, C8-C18 alkylethersulphate salts, C8-C18 alkylcarboxylate salts, C8-C18 alkylethercarboxylate salts, C8-C18 alkylsulphonate salts, C8-C18 alkylethersulphonate salts, C8-C18 alkylsuccinate salts, and C8-C18 alkylethersuccinate salts.

6. Process according to claim 5, wherein the weight ratio of ampholytic surfactant to anionic surfactant is in the range of 5:1 to 1:5, in particular in the range of 3:1 to 1:3.

7. Process according to any one of the preceding claims wherein the reaction mixture as it is brought to polymerisation and curing conditions has a total surfactant concentration of 0.5-4 wt.%, in particular 1-3 wt.%.

8. Process according to any one of the preceding claims, wherein the prepolymer is derived from a combination of polyol monomers and polycarboxylic acid monomers,
the polyol monomers preferably being selected from aliphatic polyols with 2-15 carbon atoms, in particular polyols with at least three hydroxylgroups, e.g., glycerol, sorbitol, xylitol, and mannitol, in particular glycerol,
the polycarboxylic acid monomers preferably being selected from aliphatic polycarboxylic acids with 3-15 carbon atoms, in particular polycarboxylic acids with at least three carboxylic acid groups, e.g., citric acid, isocitric acid, aconitic acid (both cis and trans), and 3-carboxy-cis,cis- muconic acid, in particular citric acid.

9. Process according to any one of the preceding claims, wherein the prepolymer is obtained by subjecting a mixture of the monomers in the liquid phase to a reaction step at a temperature in the range of 20-250°C, e.g., 40-200°C, e.g. 60-200°C, or 90-200°C.

10. Process according to any one of the preceding claims, wherein the extent of polymerization of the prepolymer as it is provided to the agitation step to be at least 0.3, in particular at least 0.4, more in particular at least 0.5 and/or at most 0.7.

11. Process according to any one of the preceding claims, wherein the agitation step is carried out in a high shear mixer.

12. Process according to any one of the preceding claims, the curing step in the absence of agitation takes place at an internal temperature of at least 80ºC, in particular at least 100ºC, more in particular at least 120ºC, even more in particular at least 130ºC and/or at most 250ºC, in particular in the range of 130-200ºC.

13. Process according to any one of the preceding claims, wherein the curing step is carried out at subatmospheric pressure.

14. Thermoset polymer foam, comprising a polymer obtained by polymerisation of a combination of polyol monomers and polycarboxylic acid monomers, of hydroxycarboxylic acid monomers, or of a combination of polyol monomers and polycarboxylic acid monomers and hydroxycarboxylic acid monomers, and an ampholytic surfactant, the total surfactant concentration being in the range of 0.1-6 wt.%, the polymer having an extent of polymerisation of at least 0.8 and a density of at most 850 gram/liter.

15. Thermoset polymer foam which has a density of between 10 and 300 gram/I or between 300 and 700 gram/I or between 500 and 850 g/l.

## Patentansprüche

1. Ein Verfahren zur Herstellung eines duroplastischen Polymerschaums, umfassend die Schritte
- Unterziehen eines Reaktionsgemischs, umfassend grenzflächenaktives Mittel und ein Vorpolymer, einem Rührschritt, wobei das Vorpolymer durch Polymerisation einer Kombination von Polyolmonomeren und Polycarbonsäuremonomeren, von Hydroxycarbonsäuremonomeren oder einer Kombination von Polyolmonomeren und Polycarbonsäuremonomeren und Hydroxycarbonsäuremonomeren erhalten wird, wobei das Vorpolymer einen Polymerisationsgrad zwischen 0,1 und 0,8 aufweist, wobei der Polymerisationsgrad wie in der Beschreibung beschrieben gemessen wird, und
- Unterziehen des so erhaltenen Reaktionsgemischs einem Härtungsschritt in Abwesenheit von Rühren, um einen duroplastischen Polymerschaum zu erhalten,
wobei das grenzflächenaktive Mittel ein ampholytisches grenzflächenaktives Mittel umfasst, wobei die Gesamtkonzentration an grenzflächenaktivem Mittel im Bereich von 0,1-6 Gew.-% liegt.

2. Verfahren nach Anspruch 1, wobei das ampholytische grenzflächenaktive Mittel eine positive Ladung auf mindestens einem Stickstoffatom und eine negative Ladung auf mindestens einem Sauerstoffatom, z.B. in einer Gruppe, ausgewählt aus Aminoxid, Carboxylat, Sulfat, Sulfonat, Phosphat und Phosphonat, umfasst.

3. Verfahren nach Anspruch 1, wobei das ampholytische grenzflächenaktive Mittel mindestens einen geradkettigen C8-C20-Alkylschwanz, mindestens ein positiv geladenes Stickstoffatom, z.B. in einer quartären Ammoniumgruppe, und mindestens eine negative Ladung, z.B. in einer Gruppe, ausgewählt aus Aminoxid, Carboxylat, Sulfat, Sulfonat, Phosphat oder Phosphonat, umfasst.

4. Verfahren nach einem der vorhergehenden Ansprüche, wobei das ampholytische grenzflächenaktive Mittel ausgewählt ist aus der Gruppe von
Alkylbetainen der Formel I
Formel I: R₁R₂R₃N⁺-CH₂COO⁻
Alkylsulfobetainen der Formel II
Formel II: R₁R₂R₃N⁺-CH₂-CH₂-CH₂-SOOO⁻
Alkylhydroxysultainen der Formel III
Formel III: R₁R₂R₃N⁺-CH₂-C(OH)H-CH₂-SOOO⁻
Aminoxiden der Formel IV
Formel IV: R₁R₂R₃N⁺O⁻
Alkylamidobetainen der Formel V
Formel V: R₁-CO-NH-CH₂-CH₂-CH₂-R₂R₃N⁺-CH₂-COO⁻,
wobei in Formel I, II, III, IV und V
R₁ 8 bis 20 Kohlenstoffatome enthält und R₂ und R₃ jeweils 1-4 Kohlenstoffatome enthalten,
Acylphosphocholinverbindungen, Phosphatidylcholinverbindungen, Phosphatidylethanolaminverbindungen, Phosphatidylinositolverbindungen, polymeren grenzflächenaktiven Mitteln und Lecithin, wobei Lecithin eine bevorzugte Verbindung ist.

5. Verfahren nach einem der vorhergehenden Ansprüche, wobei das Reaktionsgemisch, umfassend grenzflächenaktives Mittel und ein Vorpolymer, das einem Rührschritt unterzogen wird, ferner ein anionisches grenzflächenaktives Mittel, insbesondere ein anionisches grenzflächenaktives Mittel, ausgewählt aus der Gruppe aus C8-C18-Alkylsulfatsalzen, C8-C18-Alkylethersulfatsalzen, C8-C18-Alkylcarboxylatsalzen, C8-C18-Alkylethercarboxylatsalzen, C8-C18-Alkylsulfonatsalzen, C8-C18-Alkylethersulfonatsalzen, C8-C18-Alkylsuccinatsalzen und C8-C18-Alkylethersuccinatsalzen, umfasst.

6. Verfahren nach Anspruch 5, wobei das Gewichtsverhältnis von ampholytischem grenzflächenaktivem Mittel zu anionischem grenzflächenaktivem Mittel im Bereich von 5:1 bis 1:5, insbesondere im Bereich von 3:1 bis 1:3, liegt.

7. Verfahren nach einem der vorhergehenden Ansprüche, wobei das Reaktionsgemisch, unter Polymerisations- und Härtungsbedingungen, eine Gesamtkonzentration an grenzflächenaktivem Mittel von 0,5-4 Gew.-%, insbesondere 1-3 Gew.-%, aufweist.

8. Verfahren nach einem der vorhergehenden Ansprüche, wobei das Vorpolymer von einer Kombination von Polyolmonomeren und Polycarbonsäuremonomeren abgeleitet ist, wobei die Polyolmonomere vorzugsweise aus aliphatischen Polyolen mit 2-15 Kohlenstoffatomen, insbesondere Polyolen mit mindestens 3 Hydroxylgruppen, z.B. Glycerin, Sorbit, Xylit und Mannit, insbesondere Glycerin, ausgewählt sind,
wobei die Polycarbonsäuremonomere vorzugsweise aus aliphatischen Polycarbonsäuren mit 3-15 Kohlenstoffatomen, insbesondere Polycarbonsäuren mit mindestens drei Carbonsäuregruppen, z.B. Citronensäure, Isocitronensäure, Aconitsäure (sowohl cis als auch trans) und 3-Carboxy-cis,cis-muconsäure, insbesondere Citronensäure, ausgewählt sind.

9. Verfahren nach einem der vorhergehenden Ansprüche, wobei das Vorpolymer erhalten wird, indem man ein Gemisch der Monomere in der flüssigen Phase einem Reaktionsschritt bei einer Temperatur im Bereich von 20-250°C, z.B. 40-200°C, z.B. 60-200°C oder 90-200°C, unterzieht.

10. Verfahren nach einem der vorhergehenden Ansprüche, wobei der Polymerisationsgrad des Vorpolymers, wenn es dem Rührschritt zugeführt wird, mindestens 0,3, insbesondere mindestens 0,4, noch mehr insbesondere mindestens 0,5 und/oder höchstens 0,7 betragen soll.

11. Verfahren nach einem der vorhergehenden Ansprüche, wobei der Rührschritt in einem Hochschermischer durchgeführt wird.

12. Verfahren nach einem der vorhergehenden Ansprüche, wobei der Härtungsschritt in Abwesenheit von Rühren bei einer Innentemperatur von mindestens 80°C, insbesondere mindestens 100°C, noch mehr insbesondere mindestens 120°C, sogar noch mehr insbesondere mindestens 130°C und/oder höchstens 250°C, insbesondere im Bereich von 130-200°C, durchgeführt wird.

13. Verfahren nach einem der vorhergehenden Ansprüche, wobei der Härtungsschritt bei subatmosphärischem Druck durchgeführt wird.

14. Duroplastischer Polymerschaum, umfassend ein Polymer, erhalten durch Polymerisation einer Kombination von Polyolmonomeren und Polycarbonsäuremonomeren, von Hydroxycarbonsäuremonomeren oder einer Kombination von Polyolmonomeren und Polycarbonsäuremonomern und Hydroxycarbonsäuremonomeren, und eines ampholytischen grenzflächenaktiven Mittels, wobei die Gesamtkonzentration an grenzflächenaktivem Mittel im Bereich von von 0,1-6 Gew.-% liegt, wobei das Polymer einen Polymerisationsgrad von mindestens 0,8 und eine Dichte von höchstens 850 Gramm/Liter aufweist.

15. Duroplastischer Polymerschaum, welcher eine Dichte zwischen 10 und 300 Gramm/I oder zwischen 300 und 700 Gramm/I oder zwischen 500 und 850 g/l aufweist.

## Revendications

1. Procédé de fabrication d'une mousse polymère thermodurcie, comprenant les étapes de
- soumission d'un mélange réactionnel comprenant un tensioactif et un prépolymère à une étape d'agitation, le prépolymère étant obtenu par la polymérisation d'une combinaison de monomères de polyol et de monomères d'acide polycarboxylique, de monomères d'acide hydroxycarboxylique, ou d'une combinaison de monomères de polyol et de monomères d'acide polycarboxylique et de monomères d'acide hydroxycarboxylique, le prépolymère ayant un degré de polymérisation entre 0,1 et 0,8, le degré de polymérisation étant mesuré comme décrit dans la description, et
- soumission du mélange réactionnel ainsi obtenu à une étape de durcissement en l'absence d'agitation, pour obtenir une mousse polymère thermodurcie, dans lequel le tensioactif comprend un tensioactif ampholyte, la concentration totale en tensioactif étant dans la plage de 0,1 à 6 % en poids.

2. Procédé selon la revendication 1, dans lequel le tensioactif ampholyte comprend une charge positive sur au moins un atome d'azote et une charge négative sur au moins un atome d'oxygène, par ex., dans un groupe sélectionné parmi l'amine-oxyde, le carboxylate, le sulfate, le sulfonate, le phosphate et le phosphonate.

3. Procédé selon la revendication 1, dans lequel le tensioactif ampholyte comprend au moins une queue alkyle en C8 à C20 à chaîne linéaire, au moins un atome d'azote chargé positivement, par ex., dans un groupe ammonium quaternaire, et au moins une charge négative, par ex., dans un groupe sélectionné parmi l'amine-oxyde, le carboxylate, le sulfate, le sulfonate, le phosphate ou le phosphonate.

4. Procédé selon l'une quelconque des revendications précédentes, dans lequel le tensioactif ampholyte est sélectionné parmi le groupe des
alkylbétaïnes de formule I
Formule I : R₁R₂R₃N⁺-CH₂-COO⁻
alkylsulfobétaïnes de formule II
Formule II : R₁R₂R₃N⁺-CH₂-CH₂-CH₂-SOOO⁻
alkylhydroxysultaïnes de formule III
Formule III : R₁R₂R₃N⁺-CH₂-C(OH)H-CH₂-SOOO⁻
amine-oxydes de formule IV
Formule IV : R₁R₂R₃N⁺O⁻
alkylamidobétaïnes de formule V
Formule V : R₁-CO-NH-CH₂-CH₂-CH₂-R₂R₃N⁺-CH₂-COO⁻
dans lequel, dans les formules I, II, III, IV et V
R₁ contient 8 à 20 atomes de carbone et R₂ et R₃ contiennent chacun 1 à 4 atomes de carbone, des composés acylphosphocholine, des composés phosphatidylcholine, des composés phosphatidyléthanolamine, des composés phosphatidylinositol, des tensioactifs polymères et de la lécithine, la lécithine étant un composé préféré.

5. Procédé selon l'une quelconque des revendications précédentes, dans lequel le mélange réactionnel comprenant un tensioactif et un prépolymère qui est soumis à une étape d'agitation comprend en outre un tensioactif anionique, en particulier un tensioactif anionique sélectionné parmi le groupe des sels d'alkylsulfate en C8 à C18, des sels d'alkyléthersulfate en C8 à C18, des sels d'alkylcarboxylate en C8 à C18, des sels d'alkyléthercarboxylate en C8 à C18, des sels d'alkylsulfonate en C8 à C18, des sels d'alkyléthersulfonate en C8 à C18, des sels d'alkylsuccinate en C8 à C18 et des sels d'alkyléthersuccinate en C8 à C18.

6. Procédé selon la revendication 5, dans lequel le rapport en poids du tensioactif ampholyte sur le tensioactif anionique est dans la plage de 5:1 à 1:5, en particulier dans la plage de 3:1 à 1:3.

7. Procédé selon l'une quelconque des revendications précédentes dans lequel le mélange réactionnel, tel qu'il est amené aux conditions de polymérisation et de durcissement, possède une concentration totale en tensioactif de 0,5 à 4 % en poids, en particulier de 1 à 3 % en poids.

8. Procédé selon l'une quelconque des revendications précédentes, dans lequel le prépolymère est dérivé d'une combinaison de monomères de polyol et de monomères d'acide polycarboxylique,
les monomères de polyol étant de préférence sélectionnés parmi les polyols aliphatiques ayant 2 à 15 atomes de carbone, en particulier les polyols ayant au moins trois groupes hydroxyle, par ex., le glycérol, le sorbitol, le xylitol et le mannitol, en particulier le glycérol,
les monomères d'acide polycarboxylique étant de préférence sélectionnés parmi les acides polycarboxyliques aliphatiques ayant 3 à 15 atomes de carbone, en particulier les acides polycarboxyliques ayant au moins trois groupes acide carboxylique, par ex., l'acide citrique, l'acide isocitrique, l'acide aconitique (à la fois cis et trans) et l'acide 3-carboxy-cis,cis-muconique, en particulier l'acide citrique.

9. Procédé selon l'une quelconque des revendications précédentes, dans lequel le prépolymère est obtenu par la soumission d'un mélange des monomères dans la phase liquide à une étape de réaction à une température dans la plage de 20 à 250 °C, par ex., de 40 à 200 °C, par ex. de 60 à 200 °C ou de 90 à 200 °C.

10. Procédé selon l'une quelconque des revendications précédentes, dans lequel le degré de polymérisation du prépolymère, tel qu'il est fourni à l'étape d'agitation, étant d'au moins 0,3, en particulier d'au moins 0,4, plus particulièrement d'au moins 0,5 et/ou au plus de 0,7.

11. Procédé selon l'une quelconque des revendications précédentes, dans lequel l'étape d'agitation est effectuée dans un mélangeur à cisaillement élevé.

12. Procédé selon l'une quelconque des revendications précédentes, l'étape de durcissement, en l'absence d'agitation, a lieu à une température interne d'au moins 80 °C, en particulier d'au moins 100 °C, plus particulièrement d'au moins 120 °C, encore plus particulièrement d'au moins 130 °C et/ou au plus de 250 °C, en particulier dans la plage de 130 à 200 °C.

13. Procédé selon l'une quelconque des revendications précédentes, dans lequel l'étape de durcissement est effectuée à une pression inférieure à la pression atmosphérique.

14. Mousse polymère thermodurcie, comprenant un polymère obtenu par la polymérisation d'une combinaison de monomères de polyol et de monomères d'acide polycarboxylique, de monomères d'acide hydroxycarboxylique, ou d'une combinaison de monomères de polyol et de monomères d'acide polycarboxylique et de monomères d'acide hydroxycarboxylique, et un tensioactif ampholyte, la concentration totale en tensioactif étant dans la plage de 0,1 à 6 % en poids, le polymère ayant un degré de polymérisation d'au moins 0,8 et une densité d'au plus 850 grammes/litre.

15. Mousse polymère thermodurcie qui possède une densité entre 10 et 300 grammes/l ou entre 300 et 700 grammes/l ou entre 500 et 850 g/l.
